# EUROPÄISCHE PATENTSCHRIFT

(11) **EP 1 562 743 B1**
(45) Veröffentlichungstag und Bekanntmachung des Hinweises auf die Patenterteilung: **02.04.2008**
(21) Anmeldenummer: 03808275.6
(22) Anmeldetag: 11.11.2003
(51) Int. Cl.: B32B 15/01, B32B 15/02, B32B 15/20, B32B 33/00, F16L 59/08, F16L 59/02, F02B 77/13, G10K 11/162

(54) **SCHALLISOLIERENDER HITZESCHUTZSCHILD**
SOUNDPROOF THERMAL SHIELD
BOUCLIER THERMIQUE A ISOLATION ACOUSTIQUE

(30) Priorität: 18.11.2002 DE 10253832
(43) Veröffentlichungstag der Anmeldung: 17.08.2005
(73) Patentinhaber: Carcoustics TechConsult GmbH, 51381 Leverkusen (DE)
(72) Erfinder: BERBNER, Jürgen, 51379 Leverkusen (DE); PIRCHL, Christoph, FL-9490 Vaduz (LI); GNÄDIG, Christian, 53894 Mechernich - Obergartzem (DE)
(74) Vertreter: Meyer, Hans-Joachim
(86) Internationale Anmeldenummer: PCT/EP2003/012577
(87) Internationale Veröffentlichungsnummer: WO 2004/045843

(56) Entgegenhaltungen:
- EP-A- 0 486 427
- EP-A- 1 059 159
- DE-U- 8 900 894
- DE-U- 9 107 484

## Beschreibung

Die Erfindung betrifft einen schallisolierenden Hitzeschutzschild, insbesondere für Kraftfahrzeuge, mit einem aus Aluminium hergestellten Träger, einer Schallabsorptionsschicht und einer aus Aluminium hergestellten Wärmeabschirmung.

Derartige Hitzeschutzschilde sind in verschiedenen Ausführungen bekannt. Sie werden zum Beispiel in Kraftfahrzeugen eingesetzt, um die vom Auspufftopf und anderen Teilen der Auspuffanlage ausgehende Wärmestrahlung von der Fahrzeugkarosserie fernzuhalten und gleichzeitig eine wirksame Schallisolierung zu erzielen. Herkömmliche Hitzeschutzschilde bestehen aus einem tragenden Aluminiumblech, einer inneren Dämmschicht aus mineralischen Fasern, beispielsweise Glas-, Gesteins- oder Keramikfasern, und einer abschließenden Aluminiumfolie. Aufgrund der Verwendung unterschiedlicher Werkstoffe für Dämmschicht und Trägerschichten ist das sortenreine Recycling herkömmlicher Hitzeschutzschilde relativ aufwendig.

In der DE 43 29 411 C2 ist ein Wärme- und Schalldämm-Material beschrieben, das zur Erleichterung seines Recyclings als Einstoffprodukt ausgeführt und als Hitzeschutzschild im Automobilbau einsetzbar ist. Das Material besteht aus mehreren Aluminiumfolien, die jeweils ein wellenförmiges Profil aus parallelen Wellenbergen und Wellentälern aufweisen, wobei in den Wellentälern jeweils Zwickel eingefaltet sind. Die Aluminiumfolien liegen überkreuz frei aufeinander und sind nur randseitig mittels einer aus Druckpunkten bestehenden Naht verbunden. Dieses bekannte Material mag zwar eine gute Wärmeabschirmwirkung haben, sein Luftschallabsorptionsvermögen wird jedoch eher unbefriedigend sein, da die Aluminiumfolien keine Schallwellen durchlassende Perforation aufweisen.

Aus der DE 91 07 484 U1 ist ein Hitzeschild zur Abschirmung von abgasführenden Teilen an einem Kraftfahrzeug gegenüber der Bodengruppe des Kraftfahrzeuges bekannt, dessen Vorderseite durch ein Trägerblech aus Aluminium gebildet ist, das an seiner Rückseite eine Schallabsorptionsschicht trägt. Um eine sortenreine Entsorgung des gesamten Hitzeschildes zum Zwecke des Recycling zu ermöglichen und eine Beibehaltung seiner ursprünglichen Schichtdicke trotz der bei der Herstellung erforderlichen Verformungen und damit eine gute Isolierwirkung zu erreichen, ist die Schallabsorptionsschicht aus einer Einlage aus einem regelmäßigen Maschenwerk aus Aluminium und mindestens einer Aluminium-Deckfolie gebildet, wobei die Einlage mit einer Wellung plissiert ist. Die Schallabsorptionswirkung dieses Hitzeschildes ist jedoch mitunter nicht zufriedenstellend. Denn es wird hier zur Erhöhung der Schallabsorptionswirkung vorgeschlagen, die plissierte Einlage mindestens zweischichtig auszubilden und dabei zwischen zwei Schichten aus Aluminium-Maschenwerk jeweils eine Aluminiumfolie als Trennfolie zu legen.

Die EP-A-0 486 427 offenbart einen entsorgbaren Hitzeschild zur Isolation von Fahrzeugteilen, wie Fahrzeugbodenteilen oder Fahrzeugstirnwandteilen, mit einer formstabilen Trägerschicht, welche eine schallabsorbierende Wärmedämmschicht trägt und dessen Wärmedämmschicht mindestens auf ihrer der Trägerschicht abgewandten Seite mit einem Schutzbelag versehen ist. Die Trägerschicht, die Wärmedämmschicht und der Schutzbelag sind aus einem entsorgungsfreundlichen Material, insbesondere aus Aluminium gefertigt. In einer von mehreren beschriebenen Ausführungsformen ist die Wärmedämmschicht mehrschichtig aufgebaut und umfasst eine oder mehrere Lagen aus einem Aluminiumgewirke. Insbesondere wird in einer bevorzugten Ausführungsform als Trägerschicht ein Aluminiumblech verwendet, das partiell perforiert ist. Als Schutzbelag ist insbesondere eine Aluminiumfolie vorgesehen.

In der DE 89 00 894 U ist ein Dämmschild für einen Kraftfahrzeugunterboden beschrieben, bei dem auf einem plattenförmigen Trägerteil eine Dämmschicht angeordnet ist, die auf der dem Trägerteil gegenüberliegenden Seite durch eine Schutzfolie abgedeckt ist. Das Trägerteil dieses Dämmschildes ist als gelochtes Metallblech oder als gitterartiges Metallteil ausgebildet. Die Dämmschicht besteht aus einer Wärmedämmmatte, welche wiederum im wesentlichen aus organischen oder mineralischen Schäumen, aus einem Glasfaseraufbau oder dergleichen besteht. Alternativ ist als Dämmschicht auch eine geknitterte Aluminiumfolie in einer oder mehreren Lagen vorgesehen.

Die EP-A-1 059 159 offenbart ein steifes, plastisch verformbares und insbesondere tiefziehbares Verbundmaterial mit mindestens einer Mittelschicht und zwei, die Mittelschicht bedeckenden Außenschichten, wobei die Mittelschicht und die Außenschichten im wesentlichen vollflächig und fest miteinander verbunden sind. Die Mittelschicht des flächigen Verbundmaterials weist eine Textilstruktur auf, ist komprimierbar und in mindestens eine Richtung dehnbar und wirkt schwingungs- und schalldämpfend. Die Mittelschicht kann insbesondere ein Gewirk aus Aluminium aufweisen. Die Außenschichten können aus Aluminiumblechen bzw. Folien bestehen. Dieses bekannte Verbundmaterial ist ferner dadurch gekennzeichnet, das die Mittelschicht und die Außenschicht miteinander verklebt sind. Als Kleber (Bindemittel) dient Epoxyharz. Die Mittelschicht wird dabei mit dem Epoxyharz gerakelt, d.h. tiefengetränkt. Aufgrund der Verklebung der Schichten mit Epoxyharz lässt sich das Verbundmaterial nicht oder nur sehr aufwendig recyceln.

Der vorliegenden Erfindung liegt die Aufgabe zugrunde, einen schallabsorbierenden Hitzeschutzschild der eingangs genannten Art zu schaffen, der sowohl eine hohe Wärmeabschirmwirkung als auch ein hohes Schallabsorptionsvermögen besitzt und sich einfach recyceln lässt.

Diese Aufgabe wird erfindungsgemäß durch den Hitzeschutzschild mit den Merkmalen des Anspruchs 1 gelöst. Vorteilhafte und bevorzugte Ausgestaltungen der Erfindung sind in den Unteransprüchen angegeben.

Da alle Elemente des erfindungsgemäßen Hitzeschutzschildes ausschließlich aus Aluminium hergestellt sind, liegt ein einfach zu recycelndes Einstoffprodukt vor. Die aus mehreren Lagen Aluminiumgewirke gebildete mattenartige Schallabsorptionsschicht verleiht dem Hitzeschutzschild ein hohes Schallabsorptionsvermögen, insbesondere Luftschallabsorptionsvermögen. Die gepresste Matte entspricht einem Porenabsorber. Die auftreffenden Schallwellen dringen in die engen Poren der Matte ein und lassen die Luft in diesen Poren hin- und herschwingen, wobei aufgrund von Reibungseffekten eine Umwandlung von Schallenergie in Wärme erfolgt. Die aus Aluminium hergestellte Wärmeabschirmung stellt eine hohe Wärmeabschirmwirkung sicher, wobei allerdings auch der perforierte Träger aus Aluminium und die Schallabsorptionsschicht zur Wärmeabschirmung mit beitragen. Die Wärmeabschirmung kann aus einem Aluminiumblech oder vorzugsweise einer Aluminiumfolie bestehen.

Für die Schallabsorptionsschicht wird vorzugsweise ein Aluminiumgewirke in Form einer Einfadenmaschenware verwendet. Die Maschenweite sowie die Maschenstruktur eines solchen Aluminiumgewirkes lassen sich relativ einfach variieren. Durch die Variation von Maschenweite und Maschenstruktur lässt sich die Porosität bzw. Durchlässigkeit der Schallabsorptionsschicht und damit deren Schallabsorptionsvermögen verändern. In diesem Zusammenhang hat es sich als vorteilhaft erwiesen, wenn das Aluminiumgewirke derart ausgebildet ist, dass der mittlere Abstand zwischen zwei aufeinander folgenden Maschenstäbchen größer oder kleiner ist, als der mittlere Abstand zwischen den beiden Schenkeln einer Masche. Eine weitere vorteilhafte Ausgestaltung besteht insbesondere darin, dass das Aluminiumgewirke unterschiedlich breite Maschenstäbchen und/oder unterschiedlich breite Maschenreihen aufweist.

Nachfolgend wird die Erfindung anhand einer mehrere Ausführungsbeispiele darstellenden Zeichnung näher erläutert. Es zeigen in nicht maßstabsgerechter Darstellung:
- Fig. 1: eine Schnittansicht eines Hitzeschutzschildes zwischen einem Auspufftopf und einem Karosserieboden eines Kraftfahrzeuges;
- Fig. 2: eine Draufsicht auf einen Abschnitt einer mattenartigen Schallabsorptionsschicht eines erfindungsgemäßen Hitzeschutzschildes;
- Fig. 3: eine schematische Darstellung eines Abschnitts einer einzelnen Lage eines Aluminiumgewirkes;
- Fig. 4: eine Schnittansicht eines Hitzeschutzschildes gemäß einer zweiten Ausführungsform zwischen einem Auspufftopf und einem Karosserieboden eines Kraftfahrzeuges; und
- Fig. 5: eine Schnittansicht eines Hitzeschutzschildes gemäß einer zweiten Ausführungsform zwischen einem Auspufftopf und einem Karosserieboden eines Kraftfahrzeuges.

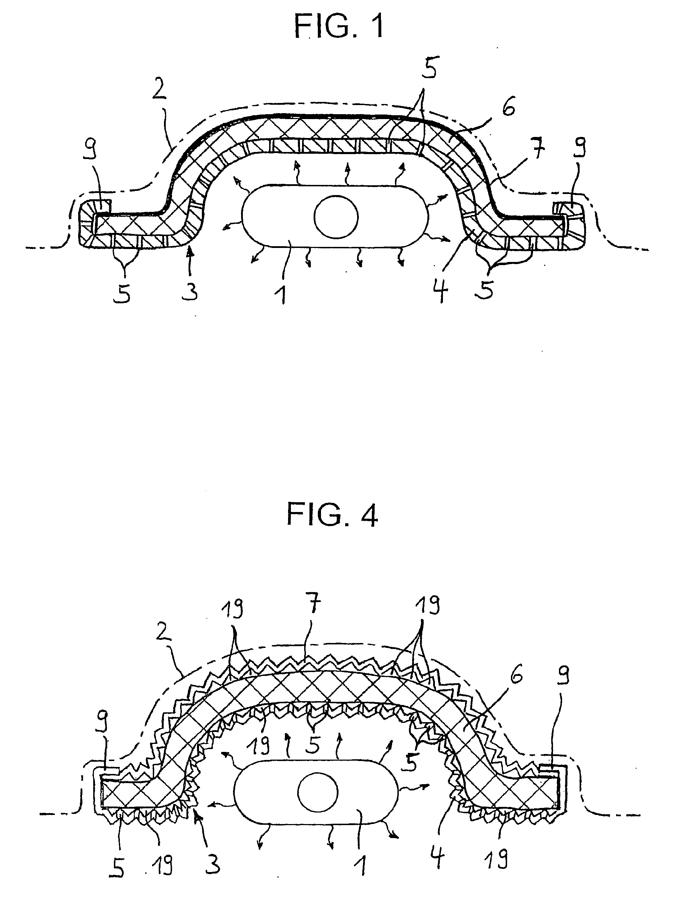

Fig. 1 zeigt in schematischer Darstellung einen wärme- und schallemittierenden Auspufftopf 1 eines Kraftfahrzeuges. Der Auspufftopf 1 ist gegenüber einem Bodenblech 2 des Kraftfahrzeuges durch einen mulden- bzw. schalenförmig ausgebildeten Hitzeschutzschild 3 abgeschirmt, der zugleich luftschallisolierend wirkt. Der nicht maßstabsgerecht dargestellte Hitzeschutzschild 3 weist einen aus Aluminium hergestellten Träger 4 auf, der mit seiner freiliegenden Seite dem Auspufftopf 1 zugewandt ist. Der Träger 4 besteht aus einem glatten, perforierten Aluminiumblech, das eine Dicke im Bereich von 0,5 bis 0,8 mm aufweist.

Es ist zu erkennen, dass der Träger 4 eine Vielzahl von Schalldurchlassöffnungen 5 aufweist. Der Durchmesser der Schalldurchlassöffnungen 5 liegt im Bereich von 0,1 bis 3 mm. Bevorzugt ist eine Ausgestaltung, bei welcher der Durchmesser der Schalldurchlassöffnungen 5 zwischen 0,1 und 1,9 mm beträgt und die Trägeroberfläche bis zu 24 Schalldurchlassöffnungen 5 pro cm² aufweist.

An der Innenseite des Trägers 4 ist eine Schallabsorptionsschicht 6 angeordnet, die insbesondere der Luftschalldämpfung dient und mit einer aus Aluminium hergestellten Wärmeabschirmung 7 abgedeckt ist. Die dem Bodenblech 2 zugewandte Wärmeabschirmung 7 besteht vorzugsweise aus einer Aluminiumfolie, die eine Dicke im Bereich von 20 bis 80 µm, beispielsweise etwa 50 µm aufweist. Die Wärmeabschirmung bzw. Aluminiumfolie 7 kann eine Mikroperforation aufweisen. Der Lochdurchmesser der (nicht dargestellten) Mikroperforation liegt beispielsweise im Bereich von 0,1 bis 1 mm, wobei bis zu 12 Löcher pro cm² ausgebildet sein können.

Anstelle eines Trägers 4 aus dünnem, mikroperforiertem Aluminiumblech kann auch ein gitterartiger Träger aus Aluminium verwendet werden, wobei dann zwischen dem Träger und der Schallabsorptionsschicht 6 vorzugsweise eine schalldurchlässige Aluminiumfolie angeordnet wird.

Der Träger 4, die Schallabsorptionsschicht 6 und die Wärmeabschirmung 7 des Hitzeschutzschildes 3 sind durch randseitige Bördelung des Trägers 4 miteinander verbunden. Die Ränder der Schallabsorptionsschicht 6 sowie der Wärmeabschirmung 7 sind dabei in der Bördelkante 9 eingeklemmt. Der Hitzeschutzschild 3 ist an der Unterseite des Fahrzeugbodens 2 vorzugsweise durch wärme- und schallisolierende Befestigungsmittel (nicht gezeigt), beispielsweise in Form von Kunststoffschrauben mit aus Elastomeren gefertigten Unterlegscheiben oder Abstandshaltern, befestigt.

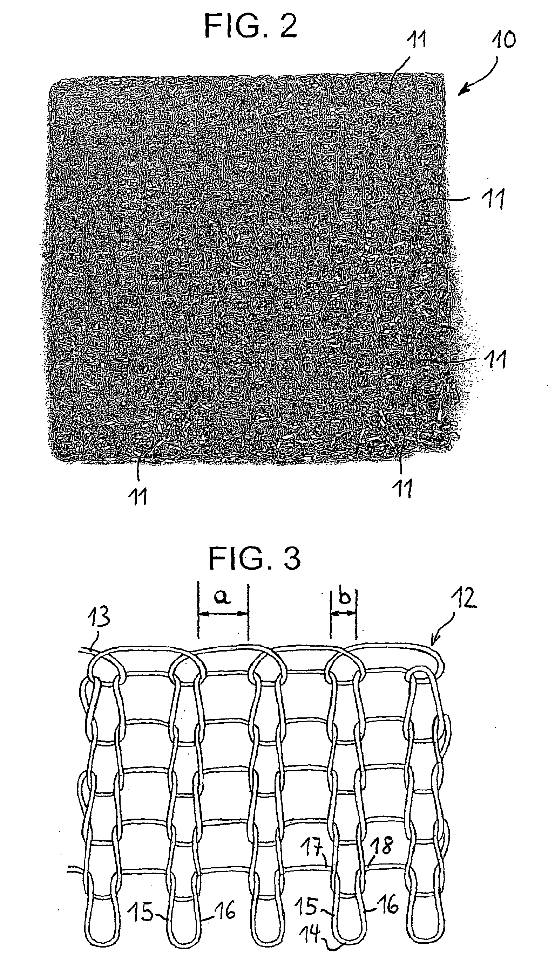

Die Schallabsorptionsschicht 6 ist aus mehreren übereinander gelegten Lagen eines Aluminiumgewirkes gebildet, wobei die Lagen zu einer gas- bzw. luftdurchlässigen Matte 10 verpresst sind. Die Matte 10 besteht aus mindestens fünf übereinanderliegenden Aluminiumgewirke-Lagen. Die Matte 10 ist ein im wesentlichen plattenförmiges Flächengebilde und besitzt eine relativ hohe Biegesteifigkeit. Ein Abschnitt einer solchen Matte 10 ist in Fig. 2 gezeigt. Die plattenförmige Matte 10 bzw. Schallabsorptionsschicht 6 weist eine Vielzahl von kleinen, verzweigten Öffnungen bzw. engen Kanälen 11 auf. Die Matte 10 bildet somit praktisch eine mikroporöse Struktur, die eine Vielzahl kleiner, offener Poren aufweist. Die Dicke der Schallabsorptionsschicht 6 bzw. Matte 10 liegt im Bereich von 0,5 bis 3 mm. Sie besitzt ein Flächengewicht im Bereich von 8 bis 15 g/dm². Der längenbezogene Strömungswiderstand der Matte 10 ist größer oder gleich 5 kNs/m⁴, vorzugsweise größer oder gleich 20 kNs/m⁴ nach DIN 52213.

In Fig. 3 ist ein Abschnitt einer einzelnen Lage 12 des Aluminiumgewirkes dargestellt. Es ist zuerkennen, dass das Aluminiumgewirke eine Einfadenmaschenware ist, d.h. die Maschenfläche ist durch die Verschlingung eines einzigen querverlaufenden, streifenförmigen Aluminiumfadens 13 gebildet. Jede Masche besteht aus einem Kopf 14, zwei Schenkeln 15, 16 und zwei Füßen 17, 18. Die nebeneinander angeordneten Maschen bilden eine entsprechend querverlaufende Maschenreihe, während mehrere übereinander angeordnete Maschen ein sogenanntes Maschenstäbchen bilden.

Das Aluminiumgewirke ist derart ausgebildet, dass der mittlere Abstand a zwischen zwei aufeinander folgenden Maschenstäbchen wesentlich größer ist, als der mittlere Abstand b zwischen den beiden Schenkeln 15, 16 einer Masche. In dem dargestellten Ausführungsbeispiel ist der mittlere Abstand a zwischen zwei aufeinander folgenden Maschenstäbchen etwa doppelt so groß wie der mittlere Abstand b zwischen den beiden Schenkeln 15, 16 einer Masche.

Das in Fig. 4 schematisch und ebenfalls nicht maßstabsgerecht dargestellte Ausführungsbeispiel unterscheidet sich von dem in Fig. 1 gezeigten Ausführungsbeispiel dadurch, dass der Träger 4 und die Wärmeabschirmung 7 profiliert ausgebildet sind. Sowohl der Träger 4 als auch die Wärmeabschirmung 7 weisen jeweils ein zickzackförmiges Profil auf, das beispielsweise durch entsprechendes Formpressen erzeugt wird. Aufgrund des zickzackförmigen Profils des Trägers 4 und der Wärmeabschirmung 7 ergeben sich an der Unterseite und Oberseite der Schallabsorptionsschicht 6 zwickelförmige Hohlräume 19, die insbesondere wärmeisolierend wirken.

Der Träger 4 ist wiederum mit einer Vielzahl von Schalldurchlassöffnungen 5 versehen. Die Öffnungen 5 sind vom Auspufftopf 1 aus betrachtet jeweils am Grund der Zwickeltäler angeordnet. Zusätzlich oder alternativ können Schalldurchlassöffnungen auch an den äußeren Zwickelspitzen des Trägers 4 angeordnet sein.

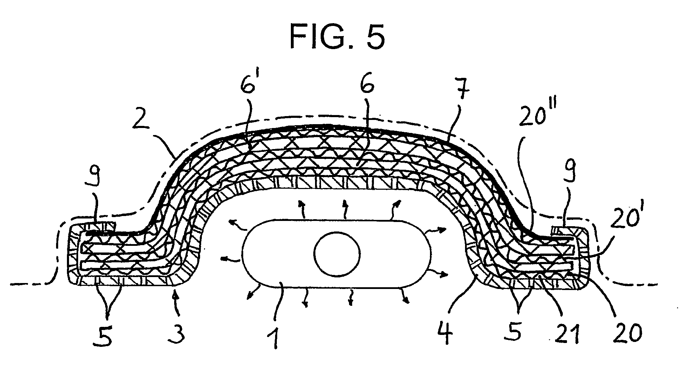

In Fig. 5 ist ein drittes Ausführungsbeispiel dargestellt, bei dem der Hitzeschild 3 wiederum einen aus Aluminium hergestellten, eine glatte Oberfläche aufweisenden Träger 4, eine Schallabsorptionsschicht 6 und eine aus Aluminiumfolie hergestellte Wärmeabschirmung 7 aufweist. Dieses Ausführungsbeispiel unterscheidet sich von dem in Fig. 1 gezeigten Ausführungsbeispiel zunächst dadurch, dass zwischen dem perforierten Träger 4 und der Schallabsorptionsschicht 6 ein Abstandshalter 20 angeordnet ist. Der Abstandshalter 20 besteht aus einer profilierten Aluminiumfolie, die vorzugsweise perforiert ist. Die Aluminiumfolie 20 ist wellenförmig, zickzackförmig oder in anderer Weise profiliert ausgebildet, so dass zwischen dem Träger 4 und der Schallabsorptionsschicht 6 ein insbesondere wärmeisolierend wirkender; spaltförmiger Luftraum 21 vorhanden ist.

Ferner unterscheidet sich das Ausführungsbeispiel gemäß Fig. 5 von dem in Fig. 1 gezeigten Ausführungsbeispiel dadurch, dass der Hitzeschild 3 eine weitere Schallabsorptionsschicht 6' aufweist, wobei zwischen den beiden Schallabsorptionsschichten 6, 6' ebenfalls ein Abstandshalter 20' angeordnet ist. Der Abstandshalter 20' kann entsprechend dem Abstandshalter 20 ausgebildet sein. Er dient der Bildung eines wärmeisolierenden Luftraums und kann insbesondere aus einer profilierten sowie perforierten Aluminiumfolie bestehen. Des weiteren ist auch zwischen der Schallabsorptionsschicht 6' und der Wärmeabschirmung 7 ein entsprechend profilierter Abstandshalter 20" vorgesehen.

Die Schallabsorptionsschichten 6, 6' sind wie bei den beiden zuvor beschriebenen Ausführungsbeispielen jeweils aus mehreren zu einer durchlässigen Matte verpressten Lagen aus Aluminiumgewirke gebildet. Die Schallabsorptionsschichten 6, 6' haben somit die Form plattgepresster Matten.

Die Erfindung ist in ihrer Ausführung nicht auf die vorstehend beschriebenen Ausführungsbeispiele beschränkt. Vielmehr sind eine Reihe von Varianten möglich, die auch bei grundsätzlich abweichender Gestaltung von dem in den beiliegenden Ansprüchen definierten Erfindungsgedanken Gebrauch machen. So kann der erfindungsgemäße Hitzeschutzschild 3 nicht nur zur Abschirmung eines Auspufftopfes 1 oder anderer Teile einer Auspuffanlage eingesetzt werden, sondern beispielsweise auch zur Abschirmung von Bereichen des Motorblockes gegenüber der Stirnwand des Fahrgastraumes. Insbesondere liegt es im Rahmen der vorliegenden Erfindung, einzelne Merkmale der vorstehend beschriebenen Ausführungsbeispiele miteinander zu kombinieren.

## Patentansprüche

1. Schallisolierender Hitzeschutzschild (3), insbesondere für Kraftfahrzeuge, mit einem aus Aluminium hergestellten Träger (4), mindestens einer Schallabsorptionsschicht (6) und einer aus Aluminium hergestellten Wärmeabschirmung (7), wobei die mindestens eine Schallabsorptionsschicht (6) aus mehreren Aluminiumgewirke-Lagen (12) gebildet ist,
**dadurch gekennzeichnet, dass**
mindestens 5 übereinanderliegende Aluminiumgewirke-Lagen (12) zu einer durchlässigen Matte (10) verpresst sind, derart, dass die Matte (10) eine Dicke im Bereich von 0,5 bis 3 mm besitzt und eine mikroporöse Struktur mit einer Vielzahl enger, verzweigter Kanäle (11) aufweist, wobei der Träger (4) eine freiliegende Seite mit einer Vielzahl von Schalldurchlassöffnungen (5) aufweist, deren Lochdurchmesser im Bereich von 0,1 bis 1,9 mm liegen, wobei bis zu 24 Schalldurchlassöffnungen (5) pro cm² angeordnet sind.

2. Hitzeschutzschild nach Anspruch 1,
**dadurch gekennzeichnet, dass**
die Matte (10) ein Flächengewicht im Bereich von 8 bis 15 g/dm² besitzt.

3. Hitzeschutzschild nach Anspruch 1 oder 2,
**dadurch gekennzeichnet, dass** die Matte (10) einen längenbezogenen Strömungswiderstand größer oder gleich 5 kNs/m⁴ aufweist.

4. Hitzeschutzschild nach einem der Ansprüche 1 bis 3,
**dadurch gekennzeichnet, dass** das Aluminiumgewirke in Form einer Einfadenmaschenware hergestellt ist.

5. Hitzeschutzschild nach einem der Ansprüche 1 bis 4,
**dadurch gekennzeichnet, dass** das Aluminiumgewirke derart ausgebildet ist, dass der mittlere Abstand (a) zwischen zwei aufeinander folgenden Maschenstäbchen größer oder kleiner ist, als der mittlere Abstand (b) zwischen den beiden Schenkeln (15, 16) einer Masche.

6. Hitzeschutzschild nach einem der Ansprüche 1 bis 5,
**dadurch gekennzeichnet, dass** das Aluminiumgewirke unterschiedlich breite Maschenstäbchen und/oder unterschiedlich breite Maschenreihen aufweist.

7. Hitzeschutzschild nach einem der Ansprüche 1 bis 6,
**dadurch gekennzeichnet, dass** der Träger (4) eine Dicke von 0,5 bis 0,8 mm aufweist.

8. Hitzeschutzschild nach einem der Ansprüche 1 bis 7,
**dadurch gekennzeichnet, dass** die Wärmeabschirmung (7) aus Aluminiumfolie gebildet ist.

9. Hitzeschutzschild nach einem der Ansprüche 1 bis 8,
**dadurch gekennzeichnet, dass** die Wärmeabschirmung (7) mikroperforiert ist.

10. Hitzeschutzschild nach einem der Ansprüche 1 bis 9,
**dadurch gekennzeichnet, dass** der Träger (4) und/oder die Wärmeabschirmung (7) profiliert ausgebildet sind.

11. Hitzeschutzschild nach einem der Ansprüche 1 bis 10,
**dadurch gekennzeichnet, dass** der Träger eine im wesentlichen glatte Oberfläche aufweist.

12. Hitzeschutzschild nach einem der Ansprüche 1 bis 11,
**dadurch gekennzeichnet, dass** zwischen dem Träger (4) und der Schallabsorptionsschicht (6) und/oder zwischen der Schallabsorptionsschicht (6') und der Wärmeabschirmung (7) ein Abstandshalter (20, 20") angeordnet ist.

13. Hitzeschutzschild nach einem der Ansprüche 1 bis 12,
**dadurch gekennzeichnet, dass** mindestens zwei Schallabsorptionsschichten (6, 6') vorhanden sind, zwischen denen ein Abstandshalter (20') angeordnet ist.

14. Hitzeschutzschild nach Anspruch 12 oder 13,
**dadurch gekennzeichnet, dass** der Abstandshalter aus einer profilierten Aluminiumfolie gebildet ist.

## Claims

1. A sound-insulating thermal shield (3), in particular for motor vehicles, comprising a support (4) made of aluminum, at least one sound-absorbing layer (6) and a thermal shielding (7) made of aluminum, wherein the at least one sound-absorbing layer (6) is composed of a plurality of knitted aluminum layers (12),
**characterized in that** at least 5 knitted aluminum layers (12) located on top of one another are pressed so as to form a permeable mat (10) in such a manner that the mat (10) has a thickness in the range of from 0.5 to 3 mm and has a microporous structure comprising a plurality of narrow branched channels (11), the support (4) having an exposed side comprising a plurality of sound passage openings (5), the hole diameters of which are in the range of from 0.1 to 1.9 mm, wherein up to 24 sound passage openings (5) are arranged per cm².

2. The thermal shield according to claim 1,
**characterized in that** the mat (10) has a mass per unit area in the range of from 8 to 15 g/dm².

3. The thermal shield according to claim 1 or 2,
**characterized in that** the mat (10) comprises a linear flow resistance of greater than or equal to 5 kNs/m⁴.

4. The thermal shield according to one of claims 1 to 3,
**characterized in that** the knitted aluminum is produced in the form of a single thread knitted fabric.

5. The thermal shield according to one of claims 1 to 4,
**characterized in that** the knitted aluminum is embodied in such a manner that the mean distance (a) between two consecutive stitch wales is greater or less than the mean distance (b) between the two legs (15, 16) of a stitch.

6. The thermal shield according to one of claims 1 to 5,
**characterized in that** the knitted aluminum comprises stitch wales of different widths and/or rows of stitches of different widths.

7. The thermal shield according to one of claims 1 to 6,
**characterized in that** the support (4) has a thickness of from 0.5 to 0.8 mm.

8. The thermal shield according to one of claims 1 to 7,
**characterized in that** the thermal shielding (7) is made from aluminum foil.

9. The thermal shield according to one of claims 1 to 8,
**characterized in that** the thermal shielding (7) is microperforated.

10. The thermal shield according to one of claims 1 to 9,
**characterized in that** the support (4) and/or the thermal shielding (7) are profiled.

11. The thermal shield according to one of claims 1 to 10,
**characterized in that** the support has a substantially smooth surface.

12. The thermal shield according to one of claims 1 to 11,
**characterized in that** a spacer (20, 20") is arranged between the support (4) and the sound-absorbing layer (6) and/or between the sound-absorbing layer (6') and the thermal shielding (7).

13. The thermal shield according to one of claims 1 to 12,
**characterized in that** at least two sound-absorbing layers (6, 6') are present, between which a spacer (20') is arranged.

14. The thermal shield according to claim 12 or 13,
**characterized in that** the spacer is composed of a profiled aluminum foil.

## Revendications

1. Bouclier thermique à isolation acoustique (3), en particulier pour véhicules automobiles, avec un support (4) fabriqué en aluminium, au moins une couche d'absorption acoustique (6), et une protection thermique (7) fabriquée en aluminium, la couche d'absorption acoustique (6) au moins prévue, étant formée par plusieurs couches de tissus à mailles en aluminium (12),
**caractérisé en ce que** cinq couches au moins de tissus à mailles en aluminium (12) sont pressées pour former un mat perméable (10) de sorte que le mat perméable (10) possède une épaisseur située dans une plage de 0,5 à 3 mm, et une structure microporeuse avec un grand nombre de canaux (11) étroits, ramifiés, le support (4) présentant un côté libre avec un grand nombre de trous de passage du son (5) dont le diamètre est situé dans une plage de 0,1 à 1,9 mm, jusqu'à 24 trous de passage du son (5) étant disposés par cm².

2. Bouclier thermique selon la revendication 1,
**caractérisé en ce que** le mat (10) a un grammage situé dans une plage de 8 à 15 g/dm².

3. Bouclier thermique selon revendication 1 ou 2,
**caractérisé en ce que** le mat (10) présente une impédance acoustique linéique supérieure ou égale à 5 kNs/m⁴.

4. Bouclier thermique selon l'une des revendications 1 à 3, **caractérisé en ce que** le tissu à mailles en aluminium est fabriqué sous la forme d'un tissu à mailles unifilaire.

5. Bouclier thermique selon l'une des revendications 1 à 4, **caractérisé en ce que** le tissu à mailles en aluminium est réalisé de sorte que l'intervalle médian (a) entre deux colonnes de mailles situées l'une après l'autre soit plus grand ou plus petit que l'intervalle médian (b) entre les deux branches (15, 16) d'une maille.

6. Bouclier thermique selon l'une des revendications 1 à 5, **caractérisé en ce que** le tissu à mailles en aluminium présente des colonnes de mailles de largeur différente, et/ou des rangs de mailles de largeur différente.

7. Bouclier thermique selon l'une des revendications 1 à 6, **caractérisé en ce que** le support (4) présente une épaisseur de 0,5 à 0,8 mm.

8. Bouclier thermique selon l'une des revendications 1 à 7, **caractérisé en ce que** la protection thermique (7) est formée par une feuille d'aluminium.

9. Bouclier thermique selon l'une des revendications 1 à 8, **caractérisé en ce que** la protection thermique (7) est microperforée.

10. Bouclier thermique selon l'une des revendications 1 à 9, **caractérisé en ce que** le support (4) et/ou la protection thermique (7) sont profilés.

11. Bouclier thermique selon l'une des revendications 1 à 10, **caractérisé en ce que** le support présente une surface sensiblement lisse.

12. Bouclier thermique selon l'une des revendications 1 à 11, **caractérisé en ce que**, entre le support (4) et la couche d'absorption acoustique (6) et/ou entre la couche d'absorption acoustique (6') et la protection thermique (7), est disposé un écarteur (20, 20").

13. Bouclier thermique selon l'une des revendications 1 à 12, **caractérisé en ce qu'**il existe au moins deux couches d'absorption acoustique (6, 6') entre lesquelles est disposé un écarteur (20').

14. Bouclier thermique selon revendication 12 ou 13,
**caractérisé en ce que** l'écarteur est formé par une feuille d'aluminium profilée.
